# EUROPEAN PATENT APPLICATION

(11) **EP 4 203 531 A1**
(43) Date of publication of application: **28.06.2023**
(21) Application number: 21913627.2
(22) Date of filing: 24.11.2021
(51) Int. Cl.: H04W 8/14

(54) **DATA TRANSMISSION METHOD AND APPARATUS, COMPUTER-READABLE STORAGE MEDIUM, ELECTRONIC DEVICE, AND COMPUTER PROGRAM PRODUCT**

(30) Priority: 04.01.2021 CN 202110003818
(71) Applicant: Tencent Technology (Shenzhen) Company Limited, Shenzhen, Guangdong 518057 (CN)
(72) Inventor: LEI, Yixue, Shenzhen, Guangdong 518057 (CN)
(74) Representative: Gunzelmann, Rainer
(86) International application number: PCT/CN2021/132781
(87) International publication number: WO 2022/142885

(57) **Abstract**

A data transmission method and apparatus, a computer-readable storage medium, an electronic device, and a program product. The data transmission method comprises: receiving a packet sent by a previous level node; when it is recognized according to indication information in the packet that the packet is a sub-packet obtained by splitting a strong interaction type packet, during the process of sending to a next level node the sub-packet obtained by splitting the strong interaction type packet, detecting the sending of the sub-packet obtained by splitting the strong interaction type packet; and when it is detected that the sending of the sub-packet obtained by splitting the strong interaction type packet to the next level node fails, stopping sending to the next level node the remaining sub-packets obtained by splitting the strong interaction type packet.

## Description

### RELATED APPLICATION

This application is based on and claims priority to Chinese Patent Application No. 202110003818.9, filed on January 4, 2021, which is incorporated herein by reference in its entirety.

### TECHNOLOGY FIELD

The present disclosure relates to the field of computer and communication technologies, and in particular, to a data transmission method and apparatus, a computer-readable storage medium, an electronic device, and a computer program product.

### BACKGROUND

In the communication field, for example, in the 5th-generation mobile communication technology (5G) and an evolved 5G system, high-bandwidth advanced interactive services are important service types, such as cloud gaming, virtual reality (VR), augmented reality (AR), mixed reality (MR), extended reality (XR), and cinematic reality (CR). These advanced interactive services have a very high requirement on timeliness of transmission. Moreover, with the improvement of the indexes, such as resolution, frame rate, and degree of freedom, the data volume generated by an application layer increases greatly, which brings a great load to network transmission.

Generally speaking, a data packet is usually segmented into a large number of sub-data packets for transmission in segments in order to transmit the data packet content generated by the application layer of an advanced interactive service. However, during transmitting the data packet of the advanced interactive service, the overall data packet content cannot be recovered and presented in real time at a receiving end when one sub-data packet fails to be transmitted, so that the requirements of the advanced interactive service on high bandwidth and low delay cannot be met.

### SUMMARY

This embodiment of the present disclosure provide a data transmission method and apparatus, a computer readable storage medium, an electronic device, and a computer program product, which can reduce the transmission delay and the transmission resource consumption of a data packet.

This embodiment of the present disclosure provide a data transmission method, which includes:
receiving a data packet transmitted by a superior node;
detecting, in response to identifying, according to indication information in the data packet, that the data packet belongs to sub-data packets obtained by splitting an advanced interactive data packet, a transmitting condition of the sub-data packets obtained by splitting the advanced interactive data packet during transmitting the sub-data packets obtained by splitting the advanced interactive data packet to a subordinate node; and
stopping transmitting the remaining sub-data packets obtained by splitting the advanced interactive data packet to the subordinate node in response to detecting that the sub-data packets obtained by splitting the advanced interactive data packet fail to be transmitted to the subordinate node.

This embodiment of the present disclosure provide another data transmission method, which includes:
receiving a data packet transmitted by the next generation nodeB;
detecting, in response to identifying, according to indication information in the data packet, that the data packet belongs to sub-data packets obtained by splitting the advanced interactive data packet, a receiving condition of all sub-data packets obtained by splitting the advanced interactive data packet during receiving the sub-data packets obtained by splitting the advanced interactive data packet;
transmitting transmission failure information to the application server of the advanced interactive data packet in response to detecting that all the sub-data packets obtained by splitting the advanced interactive data packet are not completely received within a set time length, the transmission failure information indicating that the advanced interactive data packet fails to be transmitted to the application server.

This embodiment of the present disclosure provide a data transmission apparatus, which includes:
a first receiving unit, configured to receive a data packet transmitted by a superior node;
a first detection unit, configured to detect, in response to identifying, according to indication information in the data packet, that the data packet belongs to sub-data packets obtained by splitting an advanced interactive data packet, a transmitting condition of the sub-data packets obtained by splitting the advanced interactive data packet during transmitting the sub-data packets obtained by splitting the advanced interactive data packet to a subordinate node; and
a first processing unit, configured to stop transmitting the remaining sub-data packets obtained by splitting the advanced interactive data packet to the subordinate node in response to detecting that the sub-data packets obtained by splitting the advanced interactive data packet fail to be transmitted to the subordinate node.

This embodiment of the present disclosure provide another data transmission apparatus, which includes:
a second receiving unit, configured to receive a data packet transmitted by a next generation nodeB;
a second detection unit, configured to detect, in response to identifying, according to indication information in the data packet, that the data packet belongs to sub-data packets obtained by splitting an advanced interactive data packet, a receiving condition of all sub-data packets obtained by splitting the advanced interactive data packet during receiving the sub-data packets obtained by splitting the advanced interactive data packet; and
a second processing unit, configured to transmit transmission failure information to the application server of the advanced interactive data packet in response to detecting that all the sub-data packets obtained by splitting the advanced interactive data packet are not completely received within a set time length, the transmission failure information indicating that the advanced interactive data packet fails to be transmitted to the application server.

This embodiment of the present disclosure provides a computer-readable medium, storing a computer program, the computer program, when being executed by one or more processors, implementing the data transmission method according to this embodiment of the present disclosure.

This embodiment of the present disclosure provides an electronic device, including: one or more processors; a storage apparatus configured to store one or more programs the one or more programs, when executed by the one or more processors, implementing the data transmission method according to this embodiment of the present disclosure.

This embodiment of the present disclosure provides a computer program product, including a computer program or computer instruction, the computer program or computer instruction, when executed by a processor, implements the data transmission method according to this embodiment of the present disclosure.

This embodiment of the present disclosure at least have the following beneficial effects: The advanced interactive data packet (that is, a data packet of an advanced interactive service) is split into sub-data packets for transmitting, so that the remaining sub-data packets obtained by splitting the advanced interactive data packet are stopped transmitting to the subordinate node when the sub-data packets fail to be transmitted. That is to say, invalid sub-data packets can be stopped transmitting in time when there is a sub-data packet that fails to be transmitted. Therefore, the transmission delay and the transmission resource consumption of the data packet can be reduced.

### BRIEF DESCRIPTION OF THE DRAWINGS

FIG. 1 is a schematic diagram of exemplary system architecture of this embodiment of the present disclosure.
FIG. 2 is a schematic diagram of a transmission process of an advanced interactive data packet of this embodiment of the present disclosure.
FIG. 3 is a flowchart of a data transmission method of this embodiment of the present disclosure.
FIG. 4 is a flowchart of another data transmission method of this embodiment of the present disclosure.
FIG. 5 is a schematic diagram of a transmission process of an advanced interactive data packet of this embodiment of the present disclosure.
FIG. 6 is a schematic diagram of a transmission process of an advanced interactive data packet of this embodiment of the present disclosure.
FIG. 7 is a schematic diagram of a transmission process of an advanced interactive data packet of this embodiment of the present disclosure.
FIG. 8 is a schematic diagram of transmission interaction of an advanced interactive data packet of this embodiment of the present disclosure.
FIG. 9 is a block diagram of a data transmission apparatus of this embodiment of the present disclosure.
FIG. 10 is a block diagram of another data transmission apparatus of this embodiment of the present disclosure.
FIG. 11 is a schematic structural diagram of an electronic device according to an embodiment of the present disclosure.

### DESCRIPTION OF EMBODIMENTS

In this embodiment of the present disclosure, "a plurality of" means two or more. The term "and/or" used in this specification describes an association relationship for describing associated objects and represents that three associated relationships may exist. For example, A and/or B may represent the following three associated relationships: Only A exists, both A and B exist, and only B exists. The character "/" generally indicates an "or" relationship between the associated objects.

With the development of communication field, (such as, the 4th-Generation (4G) Mobile Communication Technology and 5G) many services requiring a large data volume and a short delay are applied. For example, interactive services, such as a cloud gaming service, VR, AR, MR, XR, and CR can also be referred to as Advanced Interactive Services (AISs), and a data packet of an advanced interactive service in this embodiment of the present disclosure is referred to as an advanced interactive service.

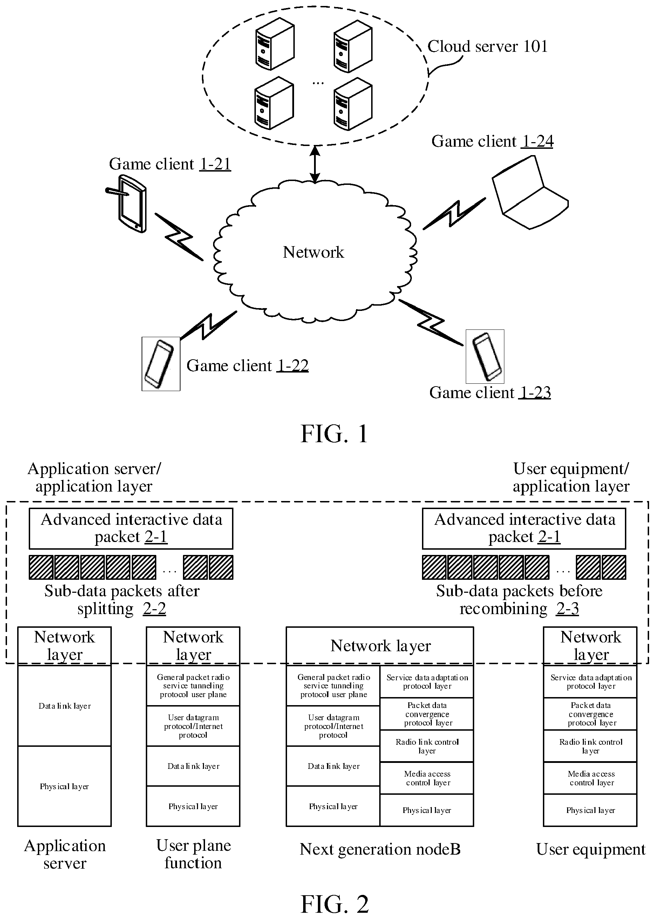

For example, in a cloud gaming scenario as shown in FIG. 1, a cloud server 101 is configured to run a game. The cloud server 101 may render a game screen, perform encoding processing on an audio signal and a rendered image, and finally transmit the encoded data obtained by the encoding processing to each game client through a network (a game client 1-21, a game client 1-22, a game client 1-23, and a game client 1-24 are shown exemplarily). The game client may be a user equipment (UE) with basic streaming media playback capability, human-computer interaction capability, communication capability, etc., such as a smart phone, a tablet computer, a notebook computer, a desktop computer, a smart TV, a set-top box, a smart on-board device, a portable music player, a personal digital assistant, a dedicated message device, a portable gaming device, and a smart speaker. Or the game client may be an application running in a terminal device, such as an original application or a software module in an operating system, and a native application (APP), that is a game APP that can be run only by installing in the operating system. An applet, that is an application that can be run only by downloading into a browser environment, can be embedded into an applet in any APP.

In this embodiment of the present disclosure, the game client may decode the encoded data transmitted by the cloud server 101, so as to obtain an analog audio and video signal and play the same. It is to be understood that FIG. 1 is only exemplary system architecture representing a cloud gaming system, but does not limit the specific architecture of the cloud gaming system. For example, in other embodiments, the cloud gaming system may further include a backend server configured to schedule and the like. The cloud server 101 may be an independent physical server, or may be a server cluster including a plurality of physical servers or a distributed system, or may be a cloud server providing basic cloud computing services, such as a cloud service, a cloud database, cloud computing, a cloud function, cloud storage, a network service, cloud communication, a middleware service, a domain name service, a security service, a content delivery network (CDN), big data, and an artificial intelligence platform. The game client and the cloud server 101 may be directly or indirectly connected in a wired or wireless communication manner. This is not limited in the present disclosure.

In application scenarios of various advanced interactive services, an advanced interactive data packet needs to be split into a plurality of sub-data packets during transmission because it is huge. That is to say, as shown in FIG. 2, in a 5G system, a user plane mainly includes an application server, a user plane function (UPF), a next generation nodeB (gNB), and a UE. For some service scenarios, the transmission of the advanced interactive data packet is mainly in a downlink direction, for example, from the application server to the UPF, and then is transmitted to the UE through the gNB. During transmission, the advanced interactive data packet 2-1 is split in an application layer of the application server. After the split sub-data packets 2-2 arrive at the UPF from the application server as an Internal protocol (IP) packet, the 5G system transmits the sub-data packets to a UE side through a PDU session, submits the sub-data packets upward level by level in the application layer of the UE side from a protocol stack, and recombines (a sub-data packet 2-3 before recombination is shown in the drawings) and recovers the advanced interactive data packet 2-1.

In the system as shown in FIG. 2, the application server includes an L1 layer, an L2 layer, and an IP layer. The UPF includes an L1 layer and an L2 layer. The UPF includes an L1layer and an L2 layer, a user datagram protocol (UDP)/IP, a general packet radio service tunneling protocol user plane, and an IP layer. The next generation nodeB includes an L1 layer, an L2 layer, a UDP/IP layer, a GTP-U layer, a physical (PHY) layer, a Media Access Control (MAC) layer, a radio link control (RLC) layer, a packet data convergence protocol (PDCP) layer, a service data adaptation protocol (SDAP) layer, and an IP layer. The UE includes the PHY layer, the MAC layer, the RLC layer, the PDCH layer, the SDAP layer, and the IP layer. L1 refers to the PHY layer, which is configured to ensure that original data can be transmitted on various physical media. L2 refers to a data link layer, which provides a service for a network layer on the basis of the service provided by the PHY. The IP layer is the network layer, which is configured to realize data transmission between two end systems.

In the application scenarios of various advanced interactive services, the advanced interactive data packet generated by the application layer needs to be segmented into a large number of sub-data packet for segmented transmission with a very low delay. Once the transmission of one of the sub-data packets does not meet a transmission requirement, then the overall advanced interactive data packet cannot be recovered and represented at a receiving end in real time, so that the requirement of an advanced interactive high-bandwidth service cannot be met. In this case, the segmented transmission of a large number of sub-data packets is a waste of network resources. For example, one advanced interactive data packet is split into 10 sub-data packets (even more sub-data packets), the probability that each sub-data packet is transmitted successfully is 0.99, then the probability that all sub-data packets are transmitted successfully is 0.99¹⁰, that is, 0.904. It can be seen that the probability of successful transmission of all sub-data packets obtained by splitting the overall advanced interactive data packet will be greatly reduced even if the probability of successful transmission of each sub-data packet is great during splitting one advanced interactive data packet into a plurality of sub-data packets. Moreover, a receiver cannot recover an advanced interactive data packet when a certain sub-data packet fails to be transmitted. In this case, there is no significance to continue to transmit the sub-data packets obtained by splitting the advanced interactive data packets. On this basis, this embodiment of the present disclosure provide a data transmission method and apparatus, a computer readable storage medium, an electronic device, and a computer program product, which can reduce the transmission delay and the transmission resource consumption of a data packet.

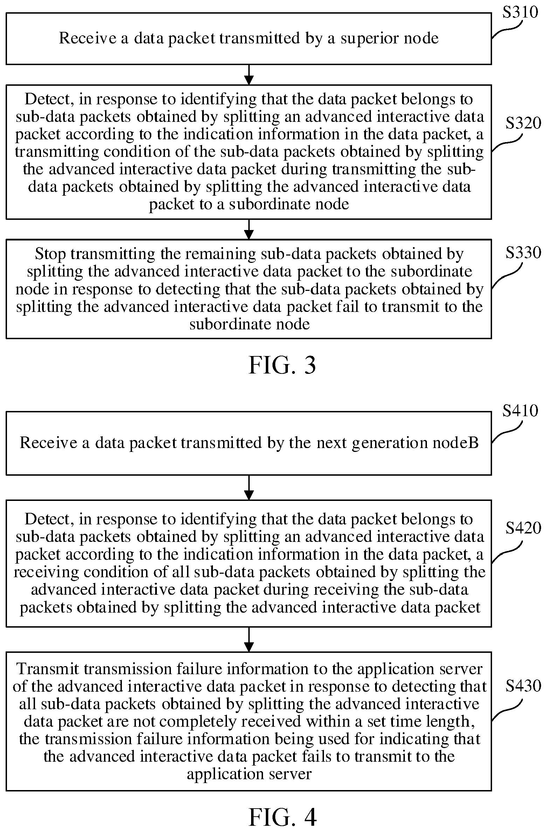

FIG. 3 is a flowchart of a data transmission method of this embodiment of the present disclosure. The data transmission method may be performed by the UPF entity or the gNB. As shown in FIG. 3, the data transmission method at least includes S310 to S330, and each step is described below.

S310. Receive a data packet transmitted by a superior node.

In this embodiment of the present disclosure, the superior node is an application server when an execution subject of the data processing method as shown in FIG. 3 is a UPF entity. That is, the UPF entity receives a data packet transmitted by the application server, and then transmits the data packet to a gNB as a subordinate node.

In this embodiment of the present disclosure, the superior node is a UPF entity when an execution subject of the data processing method as shown in FIG. 3 is a gNB. That is, the UPF entity receives a data packet transmitted by the application server, and then transmits the data packet to a UE as a subordinate node.

When a gNB is that a control plane is separated from a user plane, that is, the gNB is separated into a gNB-centralized unit (gNB-CU) and a gNB-distributed unit (gNB-DU), and the gNB-CU serves as a control plane and the gNB-DU serves as a user plane, then the gNB in this embodiment of the present disclosure may be the gNB-DU.

S320. Detect, in response to identifying, according to indication information in the data packet, that the data packet belongs to sub-data packets obtained by splitting the advanced interactive data packet, a transmitting condition of the sub-data packets obtained by splitting the advanced interactive data packet during transmitting the sub-data packets obtained by splitting the advanced interactive data packet to a subordinate node.

In this embodiment of the present disclosure, a plurality of sub-data packets obtained by splitting the advanced interactive data packet include a start data packet and an end data packet. The start data packet includes first indication information. The first indication information indicates that the start data packet is the first transmitted sub-data packet of plurality of sub-data packets. The end data packet includes second indication information. The second indication information indicates that the end data packet is the last transmitted sub-data packet of plurality of sub-data packets.

In this embodiment of the present disclosure, whether the sub-data packets obtained by splitting the advanced interactive data packet are received may be determined by identifying the start data packet and the end data packet. For example, the data packets received from the start data packet to the end data packet all belong to the sub-data packets obtained by splitting the advanced interactive data packet in a response to identifying the start data packet according to the first indication information contained in the start data packet.

In this embodiment of the present disclosure, whether the received data packet belongs to the sub-data packets obtained by splitting the advanced interactive data packet may be identified according to the indication information contained in a protocol field of the received data packet.

The start data packet in the plurality of sub-data packets obtained by splitting the advanced interactive data packet is added with the indication information used for indicating that it is a start data packet in the protocol field, and the end data packet is added with the indication information used for indicating that it is an end data packet in the protocol field. Then the received data packets from the start data packet to the end data packet all belong to the sub-data packets obtained by splitting the advanced interactive data packet after identifying the start data packet according to the protocol field of the data packet.

In this embodiment of the present disclosure, whether the received data packet belongs to the sub-data packets obtained by splitting the advanced interactive data packet may be identified according to the indication information contained in payload information of the received data packet.

The start data packet in the plurality of sub-data packets obtained by splitting the advanced interactive data packet is added with the indication information used for indicating that it is a start data packet in the payload information, and the end data packet is added with the indication information used for indicating that it is an end data packet in the payload information. Then the received data packets from the start data packet to the end data packet all belong to the sub-data packets obtained by splitting the advanced interactive data packet after identifying the start data packet according to the payload information of the data packet.

Continuing to refer to FIG. 3. S330. Stop transmitting the remaining sub-data packets obtained by splitting the advanced interactive data packet to a subordinate node in response to detecting that the sub-data packets obtained by splitting the advanced interactive data packet fail to be transmitted to the subordinate node.

In this embodiment of the present disclosure, the advanced interactive data packet cannot be recovered by continuing transmitting the remaining sub-data packets in response to detecting that the sub-data packets obtained by splitting the advanced interactive data packet fail to be transmitted to the subordinate node, so that the remaining sub-data packets may be stopped transmitting to the subordinate node, which reduces the occupation of bandwidth and is beneficial to reducing the occupation of transmission resources during transmission of the advanced interactive data packet.

In this embodiment of the present disclosure, the received sub-data packets obtained by splitting the advanced interactive data packet may also be discarded in response to detecting that the sub-data packets obtained by splitting the advanced interactive data packet fail to be transmitted to the subordinate node, so as to reduce the occupation of storage resources.

In this embodiment of the present disclosure, feedback information may be transmitted to a superior node in response to detecting that the sub-data packets obtained by splitting the advanced interactive data packet fail to be transmitted to the subordinate node. The feedback information is used for instructing the superior node to stop transmitting the sub-data packets obtained by splitting the advanced interactive data packet.

It can be understood that the feedback information may be transmitted to the superior node to instruct the superior node to stop transmitting the remaining sub-data packets in response to detecting that there is a sub-data packet that fails to be transmitted during transmitting the sub-data packets obtained by splitting the advanced interactive data packet to a subordinate node, so as to reduce the occupation of the transmission resources.

In this embodiment of the present disclosure, the operation that the feedback information is transmitted to the superior node is performed in response to all the sub-data packets obtained by splitting the advanced interactive data packet not being completely received. The feedback information does not need to be transmitted to the superior node when all sub-data packets obtained by splitting of advanced interactive data packet have been completely received.

In this embodiment of the present disclosure, the remaining sub-data packets obtained by splitting the advanced interactive data packet are stopped transmitting to a subordinate node, and the received sub-data packets obtained by splitting the advanced interactive data packet are discarded in response to not completely receiving all the sub-data packets obtained by splitting the advanced interactive data packet transmitted by a superior node within a set time length.

The advanced interactive data packet may be a data packet with a time limit requirement. It indicates that the advanced interactive data packet has exceeded the time limit requirement when all sub-data packets obtained by splitting the advanced interactive data packet transmitted by the superior node are not completely received within a set time length. At this moment, there is no need to transmit the remaining sub-data packets obtained by splitting the advanced interactive data packet to the subordinate node. Of course, when all sub-data packets obtained by splitting the advanced interactive data packet transmitted by the superior node not completely received within the set time length, it may also be because the superior node stops transmitting after detecting that there is a sub-data packet transmission error. At this moment, it also indicates that there is no need to transmit the remaining sub-data packets obtained by splitting the advanced interactive data packet to the subordinate node. In this case, the remaining sub-data packet obtained by splitting the advanced interactive data packet may also be stopped transmitting to subordinate node, and the received sub-data packet may also be discarded.

FIG. 3 describes the data transmission method of this embodiment of the present disclosure from the perspective of a UPF entity or a gNB. The data transmission method of this embodiment of the present disclosure is described below from the perspective of a UE.

FIG. 4 is a flowchart of a data transmission method of this embodiment of the present disclosure. The data transmission method may be executed by a UE. Referring to FIG. 4, the data transmission method at least includes S410 to S430. Various steps are respectively described below.

S410. Receive a data packet transmitted by a gNB.

S420. Detect, in response to identifying, according to indication information in the data packet, that the data packet belongs to sub-data packets obtained by splitting an advanced interactive data packet, a receiving condition of all sub-data packets obtained by splitting the advanced interactive data packet during receiving the sub-data packets obtained by splitting the advanced interactive data packet.

In this embodiment of the present disclosure, a plurality of sub-data packets obtained by splitting the advanced interactive data packet include a start data packet and an end data packet. The start data packet includes first indication information. The first indication information indicates that the start data packet is the first transmitted sub-data packet of plurality of sub-data packets. The end data packet includes second indication information. The second indication information is used for indicating that the end data packet is the last transmitted sub-data packet of plurality of sub-data packets.

Whether the sub-data packets obtained by splitting the advanced interactive data packet are received may be determined by identifying the start data packet and the end data packet. For example, the data packets received from the start data packet to the end data packet all belong to the sub-data packets obtained by splitting the advanced interactive data packet in a response to identifying the start data packet according to the first indication information contained in the start data packet.

In this embodiment of the present disclosure, whether the received data packet belongs to the sub-data packets obtained by splitting the advanced interactive data packet may be identified according to the indication information contained in a protocol field of the received data packet.

The start data packet in the sub-data packets obtained by splitting the advanced interactive data packet is added with the indication information used for indicating that it is a start data packet in the protocol field, and the end data packet is added with the indication information used for indicating that it is an end data packet in the protocol field, then the data packets from the start data packet to the end data packet all belong to the sub-data packets obtained by splitting the advanced interactive data packet after identifying the start data packet according to the protocol field of the data packet.

In this embodiment of the present disclosure, whether the received data packet belongs to the sub-data packets obtained by splitting the advanced interactive data packet may be identified according to the indication information contained in payload information of the received data packet.

The start data packet in the sub-data packets obtained by splitting the advanced interactive data packet is added with the indication information used for indicating that it is a start data packet in the payload information, and the end data packet is added with the indication information used for indicating that it is an end data packet in the payload information, then the data packets from the start data packet to the end data packet all belong to the sub-data packets obtained by splitting the advanced interactive data packet after identifying the start data packet according to the payload information of the data packet.

S430. Transmit transmission failure information to the application server of the advanced interactive data packet in response to detecting that all sub-data packets obtained by splitting the advanced interactive data packet are not completely received within a set time length. The transmission failure information indicates that the advanced interactive data packet fails to be transmitted to the application server.

In this embodiment of the present disclosure, a UE may sequentially integrate all sub-data packets according to the sequence of these sub-data packets during integrating all sub-data packets obtained by splitting the advanced interactive data packet, and a complete advanced interactive data packet is finally obtained.

In this embodiment of the present disclosure, a UE may discard the sub-data packets obtained by splitting the advanced interactive data packet in response to all the sub-data packets obtained by splitting the advanced interactive data packet not being completely received within a set time length.

The advanced interactive data packet may be a data packet with a time limit requirement. It indicates that the advanced interactive data packet has exceeded the time limit requirement in response to not completely receiving all sub-data packets obtained by splitting the advanced interactive data packet within a set time length. At this moment, there is no need to receive the sub-data packets and perform integrating processing, so the received sub-data packet may be discarded. Of course, when all sub-data packets obtained by splitting the advanced interactive data packet are not completely received within the set time length, it may also be because the gNB or the UPF stops transmitting after detecting that there is a sub-data packet transmission error due to disorder. At this moment, the received sub-data packet may also be discarded.

In this embodiment of the present disclosure, transmission failure information is transmitted to the application server of the advanced interactive data packet in response to all the sub-data packets obtained by splitting the advanced interactive data packet not being completely received within a set time length, so as to indicate that the advanced interactive data packet fails to be transmitted.

The UE may transmit, in response to all the sub-data packets obtained by splitting the advanced interactive data packet not being completely received within a set time length, the transmission failure information to the application server to indicate the application server that the advanced interactive data packet fails to be transmitted, so that the application server confirms whether to retransmit.

The data transmission method of this embodiment of the present disclosure is described above from the perspectives of the UPF entity, the gNB, and the UE respectively. The data transmission method of this embodiment of the present disclosure is described from the perspective of interaction among various entities.

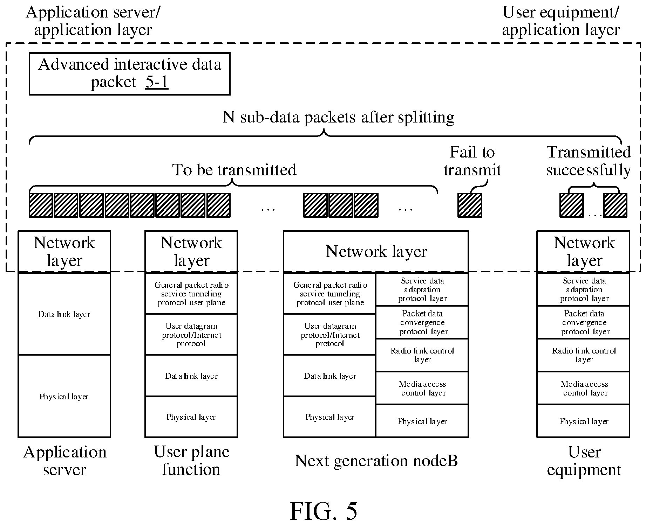

In this embodiment of the present disclosure, the sub-data packets obtained by splitting the advanced interactive data packet may be marked with start and end after the advanced interactive data packet is split. As shown in FIG. 5, on the basis of the marked start sub-data packet and the end sub-data packet, subsequent (N-m) sub-data packets to be transmitted do not need to be transmitted and may be discarded when a packet loss phenomenon occurs after m sub-data packets, including the start sub-data packet, of N sub-data packets split from one advanced interactive data packet 5-1 have been transmitted (for example, m-1 sub-data packets have been transmitted successfully, and an mth sub-data packet fails to be transmitted). N is a positive integer greater than 1, and m is a positive integer variable less than N.

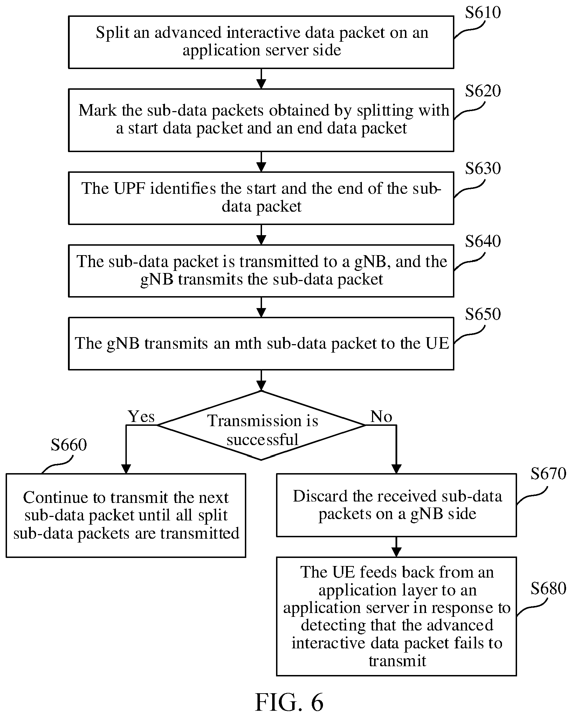

As shown in FIG. 6, the exemplary data transmission method provided by this embodiment of the present disclosure includes S610 to S680. Various steps are respectively described below.

S610. Split an advanced interactive data packet on an application server side.

In this embodiment of the present disclosure, the application server may determine a sub-packet size according to the information, such as a set sub-data packet size or the state of a network, and then split the advanced interactive data packet to obtain a plurality of sub-data packets according to the sub-packet size.

S620. Mark the sub-data packets obtained by splitting with a start data packet and an end data packet.

In this embodiment of the present disclosure, indication information may be added to the start data packet and the end data packet to mark which sub-data packet is the start data packet and which sub-data packet is the end data packet. The indication information may be added to a protocol field or payload information of a sub-data packet, for example, the indication information is added to the protocol field of a GTP-U tunnel protocol.

S630. The UPF identifies the start and the end of the sub-data packet.

In this embodiment of the present disclosure, the UPF may identify a start data packet and an end data packet in the sub-data packets in a process that the application server transmits the sub-data packets obtained by splitting to the UPF.

S640. The sub-data packet is transmitted to a gNB, and the gNB transmits the sub-data packet,

In this embodiment of the present disclosure, the UPF transmits the sub-data packets to the gNB after receiving the sub-data packets transmitted by the application server, and then the gNB transmits the sub-data packets to a UE. The gNB needs to be augmented to identify the indication information in the sub-data packets, so as to determine the start data packet and the end data packet, thereby identifying a series of sub-data packets obtained by splitting the advanced interactive data packet.

S650. The gNB transmits an mth sub-data packet to the UE.

m is a positive integer variable. The gNB determines whether the mth sub-data packet is transmitted successfully. If so, S660 is performed; or if not, S670 is performed. In addition, the gNB may also determine whether the mth sub-data packet meets a delay requirement. If so, S660 is performed; or if not, S670 is performed.

In this embodiment of the present disclosure, the gNB may transmit the sub-data packets to the UE through an air interface (Uu interface). Meanwhile, whether the data is transmitted successfully or fails to be transmitted may be determined through protocols of the Uu interface, such as a PDCP and an RLC.

S660. Continue to transmit the next sub-data packet until all split sub-data packets are transmitted

S670. Discard the received sub-data packets on a gNB side. At this moment, the remaining sub-data packets transmitted by the UPF are not transmitted to the UE.

S680. The UE feeds back from an application layer to an application server in response to detecting that the advanced interactive data packet fails to be transmitted. Optionally, the UE may determine that the advanced interactive data packet fails to be transmitted in response to all the sub-data packets of the advanced interactive data packet not being completely received within a certain time limit (referred to as a set time length). The information fed back to the application server indicates that the advanced interactive data packet has failed to transmit.

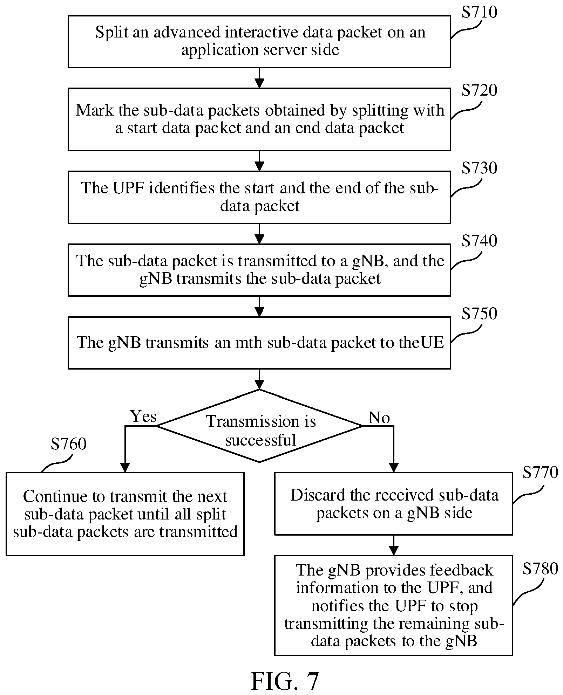

The exemplary data transmission method as shown in FIG. 6 describes a process that a UE indicates the application server that the advanced interactive data packet fails to be transmitted. In addition, a gNB in this embodiment of the present disclosure indicates the UPF a process that the advanced interactive data packet fails to be transmitted. As shown in FIG. 7, the exemplary data transmission method includes S710 to S780. Various steps are respectively described below.

S710. Split an advanced interactive data packet on an application server side.

In an embodiment of the present disclosure, an application server may determine a sub-packet size according to the information, such as a set sub-data packet size or the state of a network, and then split the advanced interactive data packet to obtain a plurality of sub-data packets according to the sub-packet size.

S720. Mark the sub-data packets obtained by splitting with a start data packet and an end data packet.

In this embodiment of the present disclosure, indication information may be added to the start data packet and the end data packet to mark which sub-data packet is the start data packet and which sub-data packet is the end data packet. The indication information may be added to a protocol field or payload information of a sub-data packet, for example, the indication information is added to the protocol field of a GTP-U tunnel protocol.

S730. The UPF identifies the start and the end of the sub-data packet.

In this embodiment of the present disclosure, the UPF may identify a start data packet and an end data packet in the sub-data packets in a process that the application server transmits the sub-data packets obtained by splitting to the UPF.

S740. The sub-data packet is transmitted to a gNB, and the gNB transmits the sub-data packet.

In this embodiment of the present disclosure, the UPF transmits the sub-data packets to the gNB after receiving the sub-data packets transmitted by the application server, and then the gNB transmits the sub-data packets to a UE. The gNB needs to be augmented to identify the indication information in the sub-data packets, so as to determine the start data packet and the end data packet, thereby identifying a series of sub-data packets obtained by splitting the advanced interactive data packet.

S750. The gNB transmits an mth sub-data packet to the UE.

The gNB determines whether the mth sub-data packet is transmitted successfully. If so, S760 is performed; or if not, S770 is performed. In addition, the gNB may also determine whether the mth sub-data packet meets a delay requirement. If so, S760 is performed; or if not, S770 is performed.

In this embodiment of the present disclosure, the gNB may transmit the sub-data packets to the UE through a Uu interface. Meanwhile, whether the data is transmitted successfully or fails to be transmitted may be determined through protocols of the Uu interface (such as a PDCP and an RLC).

S760. Continue to transmit the next sub-data packet until all split sub-data packets are transmitted

S770. Discard the received sub-data packets on a gNB side. At this moment, the remaining sub-data packets transmitted by the UPF are not transmitted to the UE.

S780. The gNB provides feedback information to the UPF, and notifies the UPF to stop transmitting the remaining sub-data packets to the gNB.

The feedback information does not need to be provided for the UPF when the gNB has completely received all sub-data packets obtained by splitting the advanced interactive data packet.

In this embodiment of the present disclosure, the data processing methods shown in FIG. 6 and FIG. 7 may also be combined. That is, the UE feeds back from an application layer to an application server in response to detecting that the advanced interactive data packet fails to be transmitted, and the gNB may also provide the feedback information for the UPF to notify the UPF to stop transmitting sub-data packets to the gNB after determining that the advanced interactive data packet fails to be transmitted.

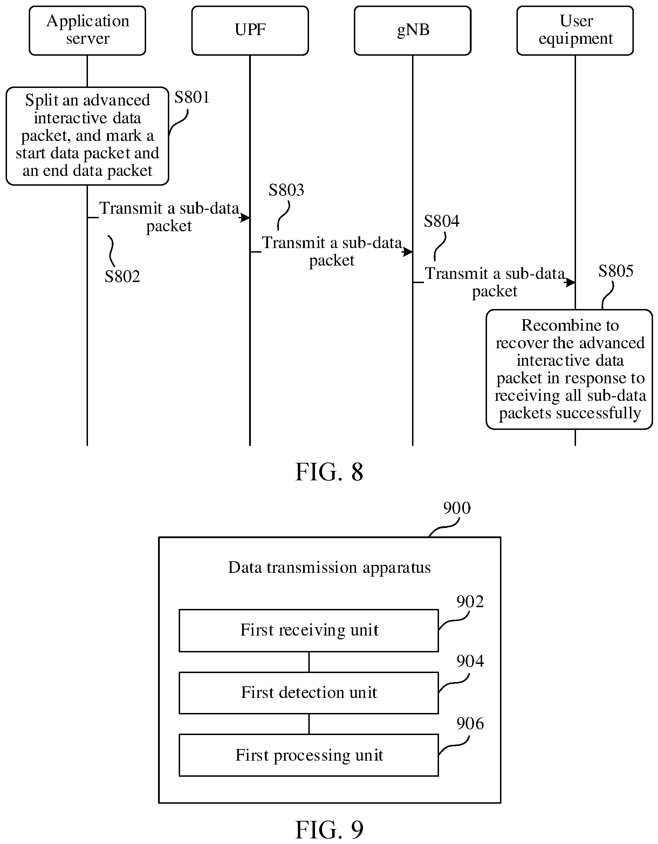

In this embodiment of the present disclosure, FIG. 8 shows an interaction process among the application server, the UPF, the gNB, and the UE, which includes S801 to S805. Various steps are respectively described below.

S801. The application server splits the advanced interactive data packet to obtain sub-data packets, and marks a start data packet and an end data packet.

In this embodiment of the present disclosure, indication information may be added to the start data packet and the end data packet to mark which sub-data packet is the start data packet and which sub-data packet is the end data packet. Optionally, the indication information may be added to a protocol field or payload information of a-data packet, for example, the indication information is added to the protocol field of a GTP-U tunnel protocol.

S802. The application server transmits sub-data packets to the UPF.

In this embodiment of the present disclosure, the UPF may identify a start data packet and an end data packet in the sub-data packets in a process that the application server transmits the sub-data packets obtained by splitting to the UPF.

S803. The UPF transmits sub-data packets to the gNB.

In this embodiment of the present disclosure, a process that the UPF transmits the sub-data packets to the gNB and the process that the application server transmits the sub-data packets to the UPF may be performed synchronously. For example, after the sub-data packets transmitted by the application server are received by the UPF (but are not completely received), the sub-data packets may be transmitted to the gNB. This mode can reduce the delay of the sub-data packets arriving at a UE. Of course, the UPF may also transmit the sub-data packets to the gNB after completely receiving the sub-data packets transmitted by the application server. Thus, the number of invalid sub-data packets transmitted to the gNB can be reduced when an error occurs during receiving by the UPF, so that the transmission resource consumption can be reduced.

In this embodiment of the present disclosure, the UPF may stop transmitting the remaining sub-data packets to the gNB in response to detecting that a certain sub-data packet fails to be transmitted in a process that the UPF transmits the sub-data packets obtained by splitting the advanced interactive data packets to the gNB, which reduces the number of the transmitted invalid sub-data packets, thereby reducing the transmission resources consumption. In this case, the UPF may also delete the received sub-data packets, and meanwhile, the UPF may also notify the application server to stop transmitting the remaining sub-data packets to thereto.

In this embodiment of the present disclosure, the UPF may also stop transmitting the remaining sub-data packets to the gNB in response to not completely receiving the sub-data packets transmitted by the application server within a set time length, the UPF may also delete the received sub-data packets, and meanwhile, the UPF may also notify the application server to stop transmitting the remaining sub-data packets thereto.

S804. The gNB transmits the sub-data packets to the UE.

In this embodiment of the present disclosure, a process that the gNB transmits the sub-data packets to the UE and the process that UPF transmits the sub-data packets to the gNB may be performed synchronously. For example, after the sub-data packets transmitted by the UPF are received by the gNB (but are not completely received), the sub-data packets may be transmitted to the UE. This mode can reduce the delay of the sub-data packets arriving at the UE. Of course, the gNB may also transmit the sub-data packets to the UE after completely receiving the sub-data packets transmitted by the UPF. Thus, the number of invalid sub-data packets transmitted to the gNB can be reduced when an error occurs during receiving by the UPF, so that the transmission resource consumption can be reduced.

In this embodiment of the present disclosure, the gNB may stop transmitting the remaining sub-data packets to the UE in response to detecting that a certain sub-data packet fails to be transmitted in a process that the gNB transmits the sub-data packets obtained by splitting the advanced interactive data packets to the UE, which reduces the number of the transmitted invalid sub-data packets, thereby reducing the transmission resources consumption. In this case, the gNB may also delete the received sub-data packets, and meanwhile, the gNB may also notify the UPF to stop transmitting the sub-data packets thereto.

In this embodiment of the present disclosure, the gNB may also stop transmitting the sub-data packets to the UE in response to not completely receiving the sub-data packets transmitted by the UPF within a set time length, the gNB may also delete the received sub-data packets, and meanwhile, the gNB may also notify the UPF to stop transmitting the sub-data packets thereto.

S805. The user equipment recombines to recover the advanced interactive data packet in response to receiving all sub-data packets successfully.

In this embodiment of the present disclosure, the user equipment may feed back from an application layer to the application server in response to detecting that the advanced interactive data packet fails to be transmitted.

In this embodiment of the present disclosure, the UE may determine that the advanced interactive data packet fails to be transmitted in response to all the sub-data packets of the advanced interactive data packet not being completely received within a set time limit. The information (referred to as transmission failure information) fed back to the application indicates that the advanced interactive data packet has failed to transmit.

According to the data transmission method of this embodiment of the present disclosure, the remaining sub-data packets (the advanced interactive data packet cannot be recovered on a UE side even if these sub-data packets, belonging to invalid packets, are transmitted) may be stopped transmitting to the subordinate node in time when the sub-data packets obtained by splitting the advanced interactive data packet fail to be transmitted, which can reduce the occupation of bandwidth, thereby reducing the occupation of transmission resources during transmission of the advanced interactive data packet.

The data transmission apparatus provided by the embodiments of the application may be configured to perform data transmission method in this embodiment of the present disclosure.

FIG. 9 is a block diagram of a data transmission apparatus of this embodiment of the present disclosure. The data transmission apparatus may be arranged inside a UPF entity or inside a gNB.

Referring to FIG. 9, a data transmission apparatus 900 of this embodiment of the present disclosure includes: a first receiving unit 902, a first detection unit 904, and a first processing unit 906.

The first receiving unit 902 is configured to receive a data packet transmitted by a superior node.

The first detection unit 904 is configured to detect, in response to identifying, according to the indication information in the data packet, that the data packet belongs to sub-data packets obtained by splitting an advanced interactive data packet, a transmitting condition of the sub-data packets obtained by splitting the advanced interactive data packet during transmitting the sub-data packets obtained by splitting the advanced interactive data packet to a subordinate node.

The first processing unit 906 is configured to stop transmitting the remaining sub-data packets obtained by splitting the advanced interactive data packet to the subordinate node in response to detecting that the sub-data packets obtained by splitting the advanced interactive data packet fail to be transmitted to the subordinate node.

In this embodiment of the present disclosure, the first processing unit 906 is further configured to discard the received sub-data packets obtained by splitting the advanced interactive data packet in response to detecting that the sub-data packets obtained by splitting the advanced interactive data packet fail to be transmitted to the subordinate node.

In this embodiment of the present disclosure, the first processing unit 906 is further configured to transmit feedback information to the superior node in response to detecting that the sub-data packets obtained by splitting the advanced interactive data packet fail to be transmitted to the subordinate node. The feedback information is used for instructing the superior node to stop transmitting the remaining sub-data packets obtained by splitting the advanced interactive data packet.

In this embodiment of the present disclosure, the first processing unit 906 is further configured to transmit the feedback information to the superior node in response to not completely receiving all sub-data packets obtained by splitting the advanced interactive data packet.

In this embodiment of the present disclosure, a plurality of sub-data packets obtained by splitting the advanced interactive data packet include a start data packet and an end data packet. The start data packet includes first indication information. The first indication information indicates that the start data packet is the first transmitted sub-data packet of the plurality of sub-data packets. The end data packet includes second indication information. The second indication information indicates that the end data packet is the last transmitted sub-data packet of the plurality of sub-data packets.

In this embodiment of the present disclosure, the first detection unit 904 is further configured to identify whether the data packet belongs to the sub-data packets obtained by splitting the advanced interactive data packet according to the indication information contained in a protocol field of the data packet.

In this embodiment of the present disclosure, the first detection unit 904 is further configured to identify whether the data packet belongs to the sub-data packets obtained by splitting the advanced interactive data packet according to the indication information contained in payload information of the data packet.

In this embodiment of the present disclosure, the first processing unit 906 is further configured to stop transmitting the sub-data packets obtained by splitting the advanced interactive data packet to the subordinate node, and discard the received sub-data packets obtained by splitting the advanced interactive data packet in response to not completely receiving all sub-data packets obtained by splitting advanced interactive data packet transmitted by the superior node within a set time length.

In this embodiment of the present disclosure, when the data transmission apparatus 900 is arranged inside a UPF entity, the superior node includes an application server, and the subordinate node includes a gNB.

In this embodiment of the present disclosure, when the data transmission apparatus 900 is arranged inside a gNB, the superior node includes an UPF entity, and the subordinate node includes a UE.

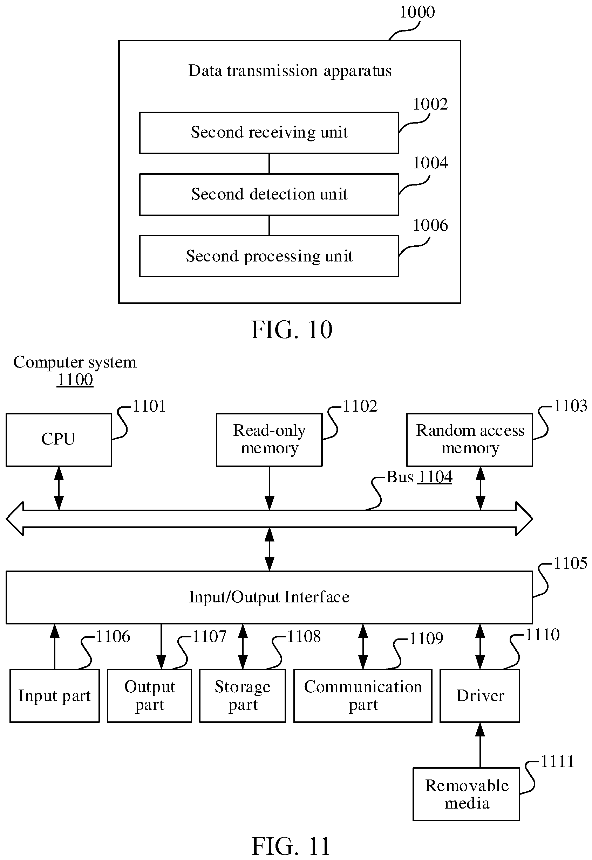

FIG. 10 is a block diagram of another data transmission apparatus of this embodiment of the present disclosure. The data transmission apparatus may be arranged inside the UE.

Referring to FIG. 10, a data transmission apparatus 1000 of this embodiment of the present disclosure includes: a second receiving unit 1002, a second detection unit 1004, and a second processing unit 1006.

The second receiving unit 1002 is configured to receive a data packet transmitted by a gNB.

The second detection unit 1004 is configured to detect, in response to identifying, according to indication information in the data packet, that the data packet belongs to sub-data packets obtained by splitting an advanced interactive data packet, a receiving condition of all sub-data packets obtained by splitting the advanced interactive data packet during receiving the sub-data packets obtained by splitting the advanced interactive data packet.

The second processing unit 1006 is configured to transmit transmission failure information to the application server of the advanced interactive data packet in response to detecting that all sub-data packets obtained by splitting the advanced interactive data packet are not completely received within a set time length. The transmission failure information indicates that the advanced interactive data packet fails to be transmitted to the application server.

In this embodiment of the present disclosure, the second processing unit 1006 is further configured to discard the received sub-data packets obtained by splitting the advanced interactive data packet in response to detecting that all sub-data packets obtained by splitting the advanced interactive data packet are not completely received within the set time length.

In this embodiment of the present disclosure, the second processing unit 1006 is further configured to integrate all of the sub-data packets to obtain the advanced interactive data packet in response to detecting that all sub-data packets obtained by splitting the advanced interactive data packet are completely received.

FIG. 11 is a schematic structural diagram of an electronic device according to an embodiment of the present disclosure.

The computer system 1100 of the electronic device shown in FIG. 11 is merely an example, and does not constitute any limitation on functions and use ranges of this embodiment of the present disclosure.

As shown in FIG. 11, the computer system 1100 includes a central processing unit (CPU) 1101 (referred to as one or more processors), which may perform various suitable actions and processing based on a program stored in a read-only memory (ROM) 1102 or a program loaded from a storage part 1108 into a random access memory (RAM) 1103, for example, perform the method described in the foregoing embodiments. The CPU 1101, the ROM 1102, and the RAM 1103 are connected to each other by using a bus 1104. The CPU 1101, the ROM 1102, and the RAM 1103 are connected to each other by using a bus 1104. An input/output (I/O) interface 1105 is also connected to the bus 1104.

The following components are connected to the I/O interface 1105: an input part 1106 including a keyboard, a mouse, and the like; an output part 1107 including a cathode ray tube (CRT), a liquid crystal display (LCD), a speaker, and the like; a storage part 1108 including hard disk, or the like; and a storage part 908 including a hard disk and the like; and a communication part 1109 including a network interface card such as a local area network (LAN) card, a modem, and the like. The communication part 1109 performs communication processing by using a network such as the Internet. A driver 1110 is also connected to the I/O interface 1105 as needed. A removable medium 1111, such as a magnetic disk, an optical disc, a magneto-optical disk, or a semiconductor memory, is installed on the drive 1110 as required, so that a computer program read from the removable medium is installed into the storage part 1108 as required.

In this embodiments of the present disclosure, the data processing method provided in this embodiments of the present disclosure may be implemented as a computer software program. For example, an embodiment of the present disclosure includes a computer program product. The computer program product includes a computer program stored in a computer-readable medium. The computer program includes a computer program used for performing the data processing method according to this embodiment of the present disclosure. In this case, by using the communication part 1109, the computer program may be downloaded and installed on a network, and/or installed from the removable medium 1111 When the computer program is executed by the central processing unit (CPU) 1101, the data processing method according to this embodiment of the present disclosure is performed.

In this embodiment of the present disclosure, the computer-readable storage medium may be, for example, but is not limited to, an electrical, magnetic, optical, electromagnetic, infrared, or semiconductor system, apparatus, or device, or any combination thereof. The computer-readable storage medium may include, but is not limited to: A more specific example of the computer-readable storage medium may include but is not limited to: an electrical connection having one or more wires, a portable computer magnetic disk, a hard disk, a random access memory (RAM), a read-only memory (ROM), an erasable programmable read-only memory (EPROM), a flash memory, an optical fiber, a compact disc read-only memory (CD-ROM), an optical storage device, a magnetic storage device, or any appropriate combination thereof. In this embodiment of the present disclosure, the computer-readable storage medium may be any tangible medium including or storing a program, and the program may be used by or in combination with an instruction execution system, apparatus or component. In this embodiment of the present disclosure, the computer-readable storage medium may further be a computer-readable signal medium, that is a data signal in a baseband or propagated as a part of a carrier wave, the data signal carrying a computer-readable program. The data signal propagated in such a way may assume a plurality of forms, including, but not limited to, an electromagnetic signal, an optical signal, or any appropriate combination thereof. The computer-readable storage medium may be any computer-readable storage medium. The computer-readable storage medium may transmit, propagate, or transmit a program that is used by or used in combination with an instruction execution system, apparatus, or device. The computer program included in the computer-readable storage medium may be transmitted by using any suitable medium, including but not limited to: a wireless medium, a wire, or the like, or any suitable combination thereof.

The flowcharts and block diagrams provided in this embodiment of the present disclosure in the accompanying drawings of the present invention illustrate possible system architectures, functions, and operations that may be implemented by a system, a method, and a computer program product according to various embodiments of the present disclosure. Each box in a flowchart or a block diagram may represent a module, a program segment, or a part of code. The module, the program segment, or the part of code includes one or more executable instructions used for implementing specified logic functions. In some implementations used as substitutes, functions annotated in boxes may alternatively occur in a sequence different from that annotated in an accompanying drawing. For example, actually two boxes shown in succession may be performed basically in parallel, and sometimes the two boxes may be performed in a reverse sequence. This is determined by a related function. Each box in a block diagram and/or a flowchart and a combination of boxes in the block diagram and/or the flowchart may be implemented by using a dedicated hardware-based system configured to perform a specified function or operation, or may be implemented by using a combination of dedicated hardware and a computer instruction.

A related unit described in this embodiment of the present disclosure may be implemented in a software manner, or may be implemented in a hardware manner, and the unit described may also be set in a processor. Names of the units do not constitute a limitation on the units in a specific case.

This embodiment of the present disclosure further provides a computer-readable storage medium. The computer-readable storage medium may be included in the electronic device described in the foregoing embodiments, or may exist alone without being assembled into the electronic device. The computer readable medium carries one or more programs that, when executed by an electronic device, causes the electronic device to perform the data transmission method in this embodiment of the present disclosure.

Although a plurality of modules or units of an electronic device configured to perform actions are discussed in this embodiment of the present disclosure, such division is not mandatory. Actually, according to the implementations of this embodiment of the present disclosure, the features and functions of two or more modules or units described in this embodiment of the present disclosure may be specifically implemented in one module or unit. Conversely, features and functions of one module or unit described in this embodiment of the present disclosure may be further divided into a plurality of modules or units for implementation.

Through the descriptions of this embodiment of the present disclosure, a person skilled in the art easily understands that the exemplary implementations described herein may be implemented through software, or may be implemented through software located in combination with necessary hardware. Therefore, the data processing method provided in this embodiment of the present disclosure may be implemented in a form of a software product. The software product may be stored in a non-volatile storage medium (which may be a CD-ROM, a USB flash drive, a removable hard disk, or the like) or on the network, including several instructions for instructing a computing device (which may be a personal computer, a server, a touch terminal, a network device, or the like) to perform the data processing method according to this embodiment of the present disclosure.

## Claims

1. A data transmission method, comprising:
receiving a data packet transmitted by a superior node;
detecting, in response to identifying, according to indication information in the data packet, that the data packet belongs to sub-data packets obtained by splitting an advanced interactive data packet, a transmitting condition of the sub-data packets obtained by splitting the advanced interactive data packet during transmitting the sub-data packets obtained by splitting the advanced interactive data packet to a subordinate node; and
stopping transmitting the remaining sub-data packets obtained by splitting the advanced interactive data packet to the subordinate node in response to detecting that the sub-data packets obtained by splitting the advanced interactive data packet fail to be transmitted to the subordinate node.

2. The data transmission method according to claim 1, further comprising:
discarding the received sub-data packets obtained by splitting the advanced interactive data packet in response to detecting that the sub-data packets obtained by splitting the advanced interactive data packet fail to be transmitted to the subordinate node.

3. The data transmission method according to claim 1, further comprising:
transmitting feedback information to the superior node in response to detecting that the sub-data packets obtained by splitting the advanced interactive data packet fail to be transmitted to the subordinate node, the feedback information being used for instructing the superior node to stop transmitting the remaining sub-data packets obtained by splitting the advanced interactive data packet.

4. The data transmission method according to claim 3, wherein the transmitting feedback information to the superior node comprises:
transmitting the feedback information to the superior node in response to all the sub-data packets obtained by splitting the advanced interactive data packet not being completely received.

5. The data transmission method according to claim 1, wherein the plurality of sub-data packets obtained by splitting the advanced interactive data packet comprise a start data packet and an end data packet;
the start data packet comprises first indication information, the first indication information indicating that the start data packet is the first transmitted sub-data packet of the plurality of sub-data packets; and
the end data packet comprises second indication information, the second indication information indicating that the end data packet is the last transmitted sub-data packet of the plurality of sub-data packets.

6. The data transmission method according to claim 1, further comprising:
identifying, according to the indication information contained in a protocol field of the data packet whether the data packet belongs to the sub-data packets obtained by splitting the advanced interactive data packet; or
identifying, according to the indication information contained in payload information of the data packet, whether the data packet belongs to the sub-data packets obtained by splitting the advanced interactive data packet.

7. The data transmission method according to claim 1, further comprising:
in response to all the sub-data packets obtained by splitting advanced interactive data packet not being completely received after being transmitted by the superior node within a set time length, stopping transmitting the sub-data packets obtained by splitting the advanced interactive data packet to the subordinate node, and discarding the received sub-data packets obtained by splitting the advanced interactive data packet.

8. The data transmission method according to any one of claims 1 to 7, wherein
the data transmission method is performed by a user plane function entity, the superior node comprises an application server, and the subordinate node comprises a next generation nodeB; or
the data transmission method is performed by the next generation nodeB, the superior node comprises the user plane function entity, and the subordinate node comprises a user equipment.

9. A data transmission method, comprising:
receiving a data packet transmitted by the next generation nodeB;
detecting, in response to identifying, according to indication information in the data packet, that the data packet belongs to sub-data packets obtained by splitting an advanced interactive data packet, a receiving condition of all the sub-data packets obtained by splitting the advanced interactive data packet during receiving the sub-data packets obtained by splitting the advanced interactive data packet;
transmitting transmission failure information to an application server of the advanced interactive data packet in response to detecting that all the sub-data packets obtained by splitting the advanced interactive data packet are not completely received within a set time length, the transmission failure information indicating that the advanced interactive data packet fails to be transmitted to the application server.

10. The data transmission method according to claim 9, further comprising:
discarding the received sub-data packets obtained by splitting the advanced interactive data packet in response to detecting that all the sub-data packets obtained by splitting the advanced interactive data packet are not completely received within the set time length.

11. The data transmission method according to claim 9, further comprising:
integrating all of the sub-data packets to obtain the advanced interactive data packet in response to detecting that all the sub-data packets obtained by splitting the advanced interactive data packet are completely received.

12. A data transmission apparatus, comprising:
a first receiving unit, configured to receive a data packet transmitted by a superior node;
a first detection unit, configured to detect, in response to identifying, according to indication information in the data packet, that the data packet belongs to sub-data packets obtained by splitting an advanced interactive data packet, a transmitting condition of the sub-data packets obtained by splitting the advanced interactive data packet during transmitting the sub-data packets obtained by splitting the advanced interactive data packet to a subordinate node; and
a first processing unit, configured to stop transmitting the remaining sub-data packets obtained by splitting the advanced interactive data packet to the subordinate node in response to detecting that the sub-data packets obtained by splitting the advanced interactive data packet fail to be transmitted to the subordinate node.

13. A data transmission apparatus, comprising:
a second receiving unit, configured to receive a data packet transmitted by a next generation nodeB;
a second detection unit, configured to detect, in response to identifying, according to indication information in the data packet, that the data packet belongs to sub-data packets obtained by splitting an advanced interactive data packet, a receiving condition of all the sub-data packets obtained by splitting the advanced interactive data packet during receiving the sub-data packets obtained by splitting the advanced interactive data packet; and
a second processing unit, configured to transmit transmission failure information to an application server of the advanced interactive data packet in response to detecting that all the sub-data packets obtained by splitting the advanced interactive data packet are not completely received within a set time length, the transmission failure information indicating that the advanced interactive data packet fails to be transmitted to the application server.

14. A computer-readable storage medium, storing a computer program, the computer program, when executed by one or more processors, implementing the data transmission method according to any one of claims 1 to 8; or implementing the data transmission method according to any one of claims 9 to 11.

15. An electronic device, comprising:
one or more processors; and
a storage apparatus, configured to store one or more programs, the one or more programs, when executed by the one or more processors, implementing the data transmission method according to any one of claims 1 to 8; or implementing the data transmission method according to any one of claims 9 to 11.

16. A computer program product, comprising a computer program or computer instructions, the computer program or computer instructions, when executed by one or more processors, implementing the data transmission method according to this embodiment of the present disclosure.
